# EUROPEAN PATENT APPLICATION

(11) **EP 4 835 409 A1**
(43) Date of publication of application: **04.11.2026**
(21) Application number: 25172887.9
(22) Date of filing: 28.04.2025
(51) Int. Cl.: G01C 21/34, G01C 21/36

(54) **CONTEXT-BASED DESTINATION DETERMINATION**

(71) Applicant: HERE Global B.V., 5611 ZT Eindhoven (NL)
(72) Inventor: Beaurepaire, Jerome, 92400 Nantes (FR); Iwanicki, Krzysztof, Chicago, 60606 (US); Derin, Onur, 5613SG Eindhoven (NL); Kondrashov, Oleksandr, 10115 Berlin (DE)
(74) Representative: Sariot, Eray

(57) **Abstract**

Apparatuses, methods, system and computer program products for navigation are disclosed. A first apparatus comprises means for obtaining a user context indicative of a previous interaction of a user with a second apparatus; means for determining, at least based on the user context, a next destination for the user; and means for providing an indication of the determined next destination to a recipient.

## Description

### TECHNOLOGICAL FIELD

The present disclosure is related to but not limited to navigation systems, apparatus and methods, in particular to locations and/or destination, in particular determination of a next destination and/or location.

### BACKGROUND

Navigation systems have evolved to one of the most ubiquitous forms of digital assistance systems, in particular for individuals. Already today, various sources of data may be merged in navigation systems such as (e.g., current) arrival times, trip durations, traffic intensity, construction works, strikes, and many more to provide a user with a best route to a pre-defined destination.

It has been recognized that, as a result, the main cognitive burden that remains on the shoulders of a given user when navigating through the external world is the selection of a destination.

It has in particular been recognized that current navigation systems are limited to specific modes of input from a user, typically to an explicit provision of a desired destination.

### SUMMARY OF SOME EXEMPLARY EMBODIMENTS

It has been recognized that current systems thus lack yet would profit from a capability to infer user preferences and/or decisions on destinations based on (e.g., previous) behavior and previous interactions of a user with digital devices.

It is thus one of the objects of the present disclosure to enhance navigation systems beyond mere routing functionalities and towards personalized destination recommendation.

It has been recognized that this object may in particular be achieved by considering user-specific data (e.g., in addition to navigation-specific information such as road networks, public transport, etc.).

It has in particular been recognized that modern users engage with a variety of media and contents throughout the day. Such interaction may leave traces related to a (e.g., potential) navigation destination. The interactions are not limited to being directed (e.g., by the user) to navigation itself but may more broadly relate to the user, e.g., their habits, preferences, interests, social interactions and/or combinations thereof. Interactions may as such comprise (e.g., be associated with; e.g., be based on) various activities such as searching the web (e.g., for a given type of food or for an area which happens to be renowned for a leisure center matching the users preferences or for products to buy), interacting with other people (e.g., via chat applications, voice messages, calls and/or use of social media platforms), and/or combinations thereof.

It has further been recognized that users interact with various devices and in particular not only a single device which they are (e.g., currently; e.g., at a given time) using for navigation. For instance, users may be using (e.g., have used earlier on a given day) their phone to browse restaurant options and may later on use (e.g., voice commands in) their car (e.g., infotainment system) to get directions. It has been recognized that such information sources spread across multiple devices (e.g., as long as they correspond to a same user) may be merged to achieve powerful personalized destination recommendation functionalities.

The interactions may take various forms yet typically involve the user and a device. In a simple form, an interaction may be a single-term internet search of the user by itself. Yet, interactions may be more complex. For instance, the user may chat with their friends and family and for instance exchange pictures which are in turn indicative of destinations (e.g., in the background of an image). Interactions may further comprise implicit location-indicative details such a mention during a phone call with a device of known location that the cake one of the callers is currently eating in a café is particularly delicious. It has been recognized that location information may be hidden in details of interactions sometimes not readily apparent. It has further been recognized that such location information may be accessed through identification of a specific interaction by its properties. It has in particular been recognized that a user typically remembers at least a few properties of past interactions and may thus be able to succinctly specify a past interaction that may be location-relevant.

Interactions may involve various content modes such as for instance voice, text, images, and videos.

It has been recognized that this rich multidevice and multimedia content may serve as a database to inform navigation systems of one or more potential next destinations.

Embodiments presented herein relate to systems leveraging the (e.g., available)(e.g., multimodal) body of information for navigation. In some embodiments, the system may be powered by a machine learning model, in particular a Large Language Model (LLM). LLMs have proven to be capable of processing and associating diverse inputs such as voice, text, images, and videos. LLMs may be suitable to recognize implicit decisions and/or detect user preferences. Various factors may be merged with the available data such as a (e.g., current) situation (e.g., available transport mode of a user) in which the user is and/or a command provided by the user.

According to a first example aspect, a method is proposed, for instance performed and or controlled by a terminal device, comprising (e.g., for recommending at least one destination as a routing target):
- obtaining or holding available (e.g., obtaining from a second apparatus, e.g. via a third apparatus such as a server) a user context, wherein the user context (e.g., comprises data which) is indicative of a (e.g., one or more) previous interaction of a user with a second apparatus (e.g., different from (e.g., type compared to) the first apparatus) (e.g., and additionally interactions with at least one or more further apparatus), wherein the previous interaction is (e.g., the interactions are respectively) indicative of the second apparatus and of at least one respective previous location(e.g., and/or destination) (e.g., related to and/or relevant to the user; e.g., of the user) (e.g., wherein the user context additionally comprises interactions which are not indicative of a destination),
- determining, at least based on the user context, a next destination (e.g. destination candidate) for the user corresponding to (e.g., identical to) a location of the at least one previous location and associated with the second apparatus,
- providing (e.g., output; e.g., visually and/or auditory; e.g., to the user) (e.g., to a routing functionality of the apparatus) an indication of the determined next destination and an indication (e.g., one joint indication) of the previous interaction (e.g., thereby indicating the second device) to a recipient.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A terminal device, e.g., a user equipment (UE), may for instance correspond to a mobile device such as for example a mobile phone, tablet, smartwatch, a laptop, a Personal Digital Assistant (PDA) device, a wearable, an Internet-of- Things (IOT) device, an IIOT (Industrial IOT) device, a vehicle and/or combinations thereof. Such a user equipment may also be referred to as user device.

The method comprises obtaining or holding available a user context. For instance, the user context may be obtained from a second apparatus. Additionally or alternatively, the user context may be obtained by intermediary (e.g., via) a third (e.g., and/or multiple further) apparatus, for instance via a server and/or a cloud service. For instance, multiple devices may be connectable and/or connected to a remote entity such as a navigation platform (e.g. hosted by at least one server) and may upload and/or download interaction and/or user contexts.

The user context (e.g., may comprise data (e.g., a table) which) is indicative of a previous interaction of a user (e.g., a same user for the (e.g., all) interactions of the user context) with a second apparatus. An interaction of the user with the second apparatus may comprise any sort of action of the user involving the second apparatus. For instance, the previous interaction may involve direct interaction between user and apparatus, for instance, an internet search, a chat with a friend and/or a phone call. Additionally or alternatively, the previous interaction may correspond to the user carrying the apparatus with them, e.g., wherein the apparatus tracks its location and/or captures signals from the user (e.g., heart rate, location, emitted audio (e.g., speech or breathing)) and/or provides output to the user (e.g., music). The user context may thus be specific to a (e.g., single) user.

The user context may be indicative of more than one previous interaction, for instance at least 2, 3, 4, 5, 10, 20, 50, 100 or more previous interactions (e.g., all involving a same user). The second apparatus may be different from the first apparatus. For instance, the second and first apparatus may have different types (e.g., smartphone vs laptop; smartwatch vs car system). The previous interactions may comprise interactions between the user and at least one or more further apparatus, e.g., in total with at least 3, 4, 5, 6, 7, 8, 9, or 10 different apparatus.

The previous interaction (e.g., in case of multiple interaction a respective interaction) is indicative of the second apparatus (e.g., the apparatus with which an interaction has been performed). For instance, the interaction may comprise (e.g., be stored along with) an indication of the second apparatus. This indication may for instance correspond to and/or comprise an identifier, a type, a location, and/or further information about the second apparatus. It has been recognized that a user typically remembers a device on which previous interactions have occurred. The apparatus may serve as a tangible tool for interacting with the digital world and may therefore be particularly strongly remembered. By storing previous interactions in combination with information about the second apparatus, the respective previous interaction may be particularly efficiently retrievable by a user. Further, it has been recognized that a (e.g., type of a) second apparatus may shape the type of interaction (e.g., desktop computer at work is typically related to individual web searches and/or chat interactions). Therefore, interactions may be filtered by type on the basis of the apparatus.

Th previous interaction may further be indicative of at least one respective previous location. The previous location may for instance have been a destination within the previous interaction. Alternatively, the location may (e.g., only) have been a location related in some way to the interaction (e.g., current location of the user during the interaction; e.g., location of another person which whom the user interacts; e.g., location of a place which a person involved in the interaction mentions and/or which the user captured on a picture and/or which is presented to the user, e.g., as a result of a web search). The previous location may be related to and/or be relevant to the user. For instance, the previous location may be a location of the user during the interaction or a location specific to the user (e.g., work or home address).

The user context may additionally comprise previous interactions which are not indicative of and/or do not specify explicitly a given location. A previous interaction may still be associable to a location. It has been recognized that diverse pieces of information which are not on first sight related to a location (e.g., do not specify (e.g., explicitly) a location) are still associable with one or more locations. For instance, to illustrate, an interaction may relate to a web search for a given product (e.g., a hammer). This interaction may be associable to locations of hardware stores in general. For instance, further, a location of one store of a chain of hardware stores on which's website the user found the hammer may be retrievable from the web, e.g., in combination with availability information of the hammer in different store locations. Relevant locations may be filtered by additionally considering a (e.g., current) location of the user (e.g., during a future interaction during which the user may have the opportunity to buy the hammer) and/or in combination with a time of the day and/or opening hours of the stores. An automatic recommendation of the nearest store (e.g., conditional on a time of the day; e.g., conditional on a distance of the user from the store) may be triggered. Additionally or alternatively, when searching for a café to meet a friend as a next destination, cafés near (e.g., suitable) hardware stores may be favored.

Interactions may be postprocessed (e.g., after being acquired). For instance, interactions may be segmented into segments. The segments may have different degrees of relevancy to locations and/or be different in their type of interaction. For instance, a conversation with another person may be segmented into different topics discussed and/or an interaction with a second device may be segmented by activity (e.g., web search vs call). The interactions may be stored in a segmented way in the context. For instance, interactions may (e.g., further) be enriched, for instance by adding information (e.g., from the web) and/or by linking them to other interactions (e.g., stored in the user context). Interactions may for instance be summarized, e.g., by segments, e.g., as one or more sentences, e.g., by using a language-processing machine learning model, in particular an LLM. For instance, an LLM may be provided with a conversation and may be used to summarize the discussed topics while placing emphasis on location-related information.

The method further comprises determining a next destination. The next destination may comprise at least or more destination candidates (e.g., at least or at most 2, 3, 4, 5, 6, 7, 8, 9 or 10). The next destination may for instance correspond to a next destination for the user, e.g., be specific to the user.

The determining may be at least based on the user context, in particular based on at least one previous interaction indicated (e.g., or comprised) by the user context. The determining may in particular be based more than one interaction, e.g., on at least 2, 3, 4, 5, 6, 7, 8, 9, 10, 20, 50, 100 or on all previous interactions of the user context. Multiple interactions may be combined (e.g., considered jointly) while determining the next destination.

The next destination may correspond to (e.g., is identical to) a location of (e.g., indicated by) the at least one previous location. The previous location may be explicitly associated to the previous interaction (e.g., the previous interaction may be a location at which the user was located during the previous interaction). Additionally or alternatively, the previous location may (e.g., only) be implicitly correlated to the previous location (e.g., the previous interaction may comprise a hint (e.g., background of an image, name of a previous location mentioned in a conversation, item searched on the web available at a location and/or combinations thereof) to the previous location.

The next destination is associated with the second apparatus. For instance, the previous interaction may have happened with the second apparatus and this may for instance suffice for the next destination to be associated with the second apparatus. The next destination may for instance be associated with at least one property of the second apparatus, for instance in that the apparatus is bound to a way of transport (e.g., a car in case the second apparatus is a car infotainment system).

The method further comprises providing an indication of the determined next destination to a recipient. For instance, the providing may correspond to and/or comprise outputting the indication. For instance, output may be provided at least one of visually (e.g., by imagery, e.g., on a map; e.g., textually, e.g., as a notification) and/or auditory (e.g., in (e.g., artificial) speech and/or a (e.g., non-verbal) sound indication).

Additional to the indication of the determined next destination, an indication of the previous interaction (e.g., thereby indicating the second device) may be provided to the recipient.

For instance, a (e.g., single) joint indication comprising (e.g., being indicative of) the indication of the determined next destination and the indication of the previous interaction may be provided.

The providing may be performed to the user (e.g., as a recipient), e.g., via a display (e.g., of the apparatus) observable by the user and/or via a speaker (e.g., of the apparatus) audible by the user and/or via tactile feedback (e.g., vibration) perceivable by the user. Additionally or alternatively, the indication may be provided to a part of a computing system (e.g., as a recipient), e.g., to a functional unit within the apparatus, e.g., to a routing functionality of the apparatus and/or to a computing system different from the apparatus (e.g., an online routing service).

According to an embodiment of the first example aspect, the recipient is at least one of
- the user (e.g., by presenting the indication of the determined next destination and the indication of the previous interaction to the user) (e.g., and asking for confirmation), or
- a part of a computer system (e.g., an API, e.g., of the first apparatus or of a different apparatus), in particular wherein the providing (e.g. automatically, e.g., independently of a user-issued command) launches a navigation (e.g., by providing the determined next destination to a routing functionality of the first apparatus) to the next destination (e.g., additionally informing the user about the previous interaction).

The recipient may be the user. For instance, the indication of the determined next destination and the indication of the previous interaction may be presented to the user, e.g., by audio and/or visually. The user may for instance be provided with an opportunity to confirm the determined next destination and/or be queried for a selection of the next destination (e.g., among at least two or more candidate next destinations).

Additionally or alternatively, the recipient may be a part of a computer system, e.g., a part of the apparatus and/or a part of another apparatus. The part of a computer system may for instance correspond to an application programming interface, API, e.g., of the first apparatus or of a different apparatus (e.g., accessed via the internet).

The providing of the indication(s) may (e.g. automatically and/or independently of a user-issued command) launch a navigation to the determined next destination. Such launching may for instance comprise providing the determined next destination to a routing functionality, e.g., of the first apparatus and/or a further apparatus. The user may for instance be informed accordingly, for instance about at least one of the previous interaction and/or the next destination.

According to an embodiment of the first example aspect,
- the second apparatus is different from the first apparatus, and/or
- the providing further comprises providing an indication (e.g., one joint indication) of the second apparatus to the recipient (e.g., the user).

It has been recognized that users (e.g., a same user) may interact with multiple devices. For instance, such interactions may happen in (e.g., close) succession (e.g., during a single minute, hour, day, week or month) and/or simultaneously. Thus, it may be beneficial to consider interactions from different devices when determining a next destination. Further, the user may remember typically what device they interacted with. Thus, providing an indication may further enable the user to follow the selection process adopted by the system and may for instance enable them to confirm a next destination and/or propose an alternative.

According to an embodiment of the first example aspect, the previous interaction is associated to (e.g., and/or comprises information corresponding to) at least one of (e.g., and stored as metadata, e.g., tabular metadata)(e.g. comprised in the user context):
- a time (e.g., time of the day, time stamp) (e.g., season) (e.g., year) of the previous interaction,
- the second apparatus with which the interaction took place,
- a usage context (e.g., search for a place to eat, discussion on locations with a friend, or planning a trip),
- a voice input provided by the user (e.g., during the previous interaction) (e.g., may additionally or alternatively differentiate between one or more modes (e.g., activity, mood, work vs leisure, and/or combinations thereof) of the user based on tone and/or level, further characteristics of the voice and/or combinations thereof),
- an image presented to (e.g., digitally, e.g., through an internet search and/or within an application; e.g., in a social network website and/or application) the user and/or captured by the user using a camera of the second apparatus,
- a text presented to and/or entered by the user,
- a location of the user (e.g., during at least a part of the previous interaction),
- a location of a previous destination,
- a presence of one or more further persons (e.g., during at least part of the interaction) (e.g., including characteristics such as age, relationship (e.g., family members or friends), frequency of activities together with the user)
- a sound environment (e.g., noise or quiet), or
- a transport mode (e.g., available and/or used during at least part of the interaction) (e.g., public transport, foot, bike, electric scooter, car, motorbike, plane, boat, and/or misc (e.g., skateboard, inline skates, push scooter, and/or surfboard)).

A property associated with an interaction may in particular relate to the interacting itself (e.g., when, where, how, in what environment a user interacted with which device and/or which transport mode was adopted during an interaction).

A property associated with an interaction may additionally or alternatively relate to a content of the interaction, for instance, a text entered (e.g., a content of a search) by or presented to a user, a voice input by the user, an image of the interaction (e.g., provided to or by the user), a destination entered, a location entered (e.g., discussed) and/or combinations thereof.

Properties associated with a previous interaction may be stored in a form of a human-interpretable language and/or as text (e.g., sequences of characters) and/or spoken audio. The properties may be stored in a form suitable for input to and/or originating from a language-processing machine learning model, e.g., an LLM. For instance, more than one property may be stored jointly in the form of one or more sentences, e.g., "In a phone call with John on Friday, we talked about the brunch place, he and his wife really liked and which is located near the gym we go every Sunday morning." A previous interaction may be associated to a device (phone), a person (John), a group of people (John and his wife), a time (Friday), a first location (a brunch place), a second location (a gym), a respective type of location (gym and restaurant). The interaction may for instance further comprise a transcript of at least a part of the telephone conversation.

Properties (e.g., of a respective interaction; e.g., of multiple interactions) may be stored in more than one mode of storing information, for instance, (e.g., in addition and/or alternatively to text) as an image, an audio recording and/or combinations thereof. For instance, text may refer to at least one more information element such as an image or an audio recording. For instance, an interaction may be associated to (e.g., comprise data containing) a text such as "A coworker sent me this picture of them and their friends in front of a café near our company's offices" + the picture. Or, "When talking about the current construction works on public transport, Jane forwarded me this voice message from her dad working for the city along with a sad smiley face as an emoji."

An interaction may (e.g., only) comprise at least one or a set of properties (e.g., as one or more sentences, images, audio content and/or combinations thereof). An interaction may further comprise further information, e.g., (raw) data on the interaction. The data may for instance comprise a text (e.g., chat history, search history or transcript of a conversation), an image (e.g., screen shot from a video call) and/or an audio file (e.g., selected passages of a call relevant to a location; e.g., or the entire call).

A time of a previous interaction may for instance correspond to a time during which the interaction took place and/or to a time related to the interaction (e.g., a reference comprised by the interaction to a time (e.g., another time that the time during which the interaction happened) in the past or in the future (e.g., with respect to the time during which the interaction happened).

The second apparatus with which the interaction took place may be associated with the previous interaction. For instance, the previous interaction may correspond to and/or comprise an internet search at a desktop computer of the user (e.g., at work). The second apparatus may thus be utilized for referring to the previous interaction and/or be indicate along with a next destination which is based on the respective previous interaction.

The previous interaction may additionally or alternatively be associated with a usage context. The usage context may for instance correspond to one or more situations the user is in during the interaction. The usage context may for instance reflect an activity of the user (e.g., during the interaction) (e.g., work, leisure, and/or sport), a topic relevant to the user (e.g., during the interaction), a purpose of the previous interaction with the second apparatus (e.g., a search for a place to eat, (e.g., a chat-) discussion on locations with a friend, and/or planning a trip (e.g., though a web-search)).

The previous interaction may additionally or alternatively be associated with a voice input provided by the user (e.g., during the previous interaction). A voice input may for instance be part of a phone call, a recorded audio message and/or a voice command directed to the second apparatus. For instance, a voice input may be indicative of a current mode of the user. It has been recognized that voice input is information rich and may transport aspects about the speaker that go beyond information contained in the spoken text. For instance, a mode may correspond to at least one of an activity (e.g., work vs leisure), a mood of the user and/or combinations thereof. For instance, such further aspects may be derived based on a tone, level, pitch, speed of delivery, articulation, selection of words (e.g., swear words vs formal, correct language) and/or on further characteristics of the voice and/or combinations thereof. The determining of the next destination may be based on such a property (e.g., mode) of the voice of the interaction (e.g., avoid places associated with angry voice interactions).

The previous interaction may additionally or alternatively be associated with an image presented to (e.g., digitally, e.g., through an internet search and/or within an application; e.g., in a social network website and/or application) the user and/or captured by the user using a camera of the second apparatus. Images are rich sources of information and may be queried for various aspects. For instance, an image may show at least one person, a time of the day, a location (e.g., by a known (e.g., a landmark) and/or a sign (e.g., a street name or a name of a store)), a level of occupancy of an area (e.g., of a restaurant), a state of a building (e.g., new or old) and/or a state of a person (e.g., tired, sweaty, happy, and/or annoyed), and/or combinations thereof. Associating a previous interaction with at least one or more images thus provide a basis for retrieving various information about the interaction that may be helpful in devising a next destination.

The previous interaction may additionally or alternatively be associated with a text presented to and/or entered by the user. It has been recognized that text is still a major mode of a user interacting with a device. Text may be presented to the user, e.g., as a result of a web-search or as a message from another user or as an element of a map. Text may also be entered by the user, e.g., as a web-search, as a chat message, as a prompt to a machine learning model (e.g., to an LLM). Text has the added advantage that it is easily processed by language-processing machine learning models and may be treated jointly with various further pieces of information also provided as text.

The previous interaction may additionally or alternatively be associated with a location of the user (e.g., during at least a part of the previous interaction). For instance, a previous interaction may be associated with a single location or alternatively with at least two locations. A location may be defined in absolute terms (e.g., coordinates within a global coordinate system; e.g., as a city and/or a street) or in relative terms (e.g., relative to at least one other location, e.g., "between home and work"). The interaction may be associated with an indication (e.g., mobility- indicator) that the location of the user has stayed constant and/or has varied during the interaction, e.g., to a specified degree (e.g., user stayed within a radius of at least or at most 10m, 20m, 50m, 100m, 200m, 500m, 1km, 2km, 5km, 10km, 20km, 50km or 100km).

The previous interaction may additionally or alternatively be associated with a location of a previous destination. A user may have already in the previous interaction hinted towards (e.g., explicitly or implicitly) a destination, e.g., in a search for a destination. Additionally or alternatively, the previous interaction may be indicative of a location (e.g., in general) which may be different from a location of a user during the interaction and/or may not have been identified (e.g., already) as a destination of the user. Such locations may for instance relate to locations of elements associated with the interaction (e.g., of a store, a sports venue, a restaurant and/or combinations thereof) and/or retrievable from elements associated with the interaction (e.g., from an image or from a text or from an audio file). Embodiments disclosed herein may utilize location-related information associated with a previous interaction (e.g., in combination with further properties of the interaction such as for instance time, people involved, activity, mode of transport and/or combinations thereof) to determine a next destination.

The previous interaction may additionally or alternatively be associated with a presence of one or more further persons (e.g., during at least part of the interaction) (e.g., including characteristics such as age, relationship (e.g., family members or friends), frequency of activities together with the user).

The previous interaction may additionally or alternatively be associated with a sound environment (e.g., noise or quiet). For instance, such information may be derived based on audio information associated with an interaction.

The user context may comprise enriched previous interactions, e.g., wherein an enrichment is performed in post-processing. Enriched previous interactions may be associated with at least one or more derived properties (e.g., automatically derived). For instance, properties may be derived by a machine learning model. For instance, a previous interaction may be associated with at least one or more pieces of raw information (e.g., a chat during an hour of the day with a friend including a picture). The raw information may be post-processed and/or the interaction may be augmented by (e.g., associated with) derived properties, e.g., in the example such properties may be derived from the picture and/or by information derived from terms mentioned during the chat (e.g., restaurant names), e.g., into further information such as a location, opening hours, best time of arrival, lunch times and/or combinations thereof. Enriching one previous interaction may be based on at least one other previous interaction. Enriching previous interactions may enable the system to achieve quick reaction times.

The previous interaction may additionally or alternatively be associated with a transport mode. For instance, the transport mode may reflect a transport mode available and/or used during at least part of the interaction. For instance, a transport mode may comprise at least one or public transport (e.g., ferry, bus, train, subway, and/or tram), foot, bike (e.g., an own bike and/or a rented (e.g., shared) bike), an electric scooter (e.g., shared), a car (e.g., own and/or shared), a motorbike, a plane, a boat, and/or miscellaneous modes of transport such as for instance a skateboard, inline skates, push scooter, and/or surfboard. An available transport mode may be determined based on a location of the user and/or based on a movement profile of the user (e.g., indicating a particular vehicle currently used, e.g., a bike, a car or no vehicle at all). An available transport mode may further be based on preference of the user and/or further information such as an injury preventing self-driving and/or bicycle use.

According to an embodiment of the first example aspect, it is proposed that the method further comprises
- obtaining (e.g., recording, e.g., by means of at least one sensor of the first apparatus) a current interaction (e.g., inferred destination search) (e.g., of the user with the first apparatus).

Similar to previous interactions associated with the second apparatus, the method may comprise obtaining a current interaction. The current interaction may involve an apparatus performing and/or controlling the method according to the first example aspect. For instance, the method may comprise detecting an activity of the user relevant to destination determination (e.g., an approaching lunch break, opening a chat application on a phone, opening a map application) and may subsequently determine a current interaction (e.g., a current location, a text entered or received in a chat, a map area considered). Additionally or alternatively, the method may comprise continuously and/or intermittently obtaining current interactions (e.g., regardless of a type of interaction) (e.g., without the user actively interacting with the first apparatus, e.g., by continuously recording audio).

A current interaction may be informative (e.g., in combination with at least one or more previous interactions) of a previous location that may serve as a next destination.

According to an embodiment of the first example aspect, the current interaction is associated with at least one of
- a time (e.g., time of the day, time stamp) (e.g., season)(e.g., year) of the current interaction,
- the first apparatus (e.g., type),
- a usage context (e.g., search for a place to eat, discussion on locations with a friend, or planning a trip),
- a verbal input (e.g., not command) provided by the user (e.g., during the current interaction),
- an image presented to (e.g., digitally, e.g., through an internet search and/or within an application; e.g., in a social network website and/or application) the user and/or captured by the user using a camera of the first apparatus,
- a text presented to and/or entered by the user (e.g., during at least a part of the current interaction)(e.g., in a search function, a chat, a map application and/or combinations thereof),
- a location of the user (e.g., during at least a part of the previous interaction),
- a presence of one or more further persons (e.g., during at least part of the current interaction) (e.g., including characteristics such as age, relationship (e.g., family members or friends), frequency of activities together with the user),
- a sound environment (e.g., noise or quiet), or
- a transport mode (e.g., available to the user and/or used during at least part of the current interaction) (e.g., public transport, foot, bike, car, plane, boat, and/or misc. (e.g., skateboard, inline skates, scooter, surfboard)).

Similarly to the previous interaction, the current interaction may be associated with at least one or more properties. The properties may be derived (e.g., in post-processing), e.g., based on raw data associated with the current interaction (e.g., a text, an image and/or an audio file).

According to an embodiment of the first example aspect, the determining the next destination is further based on (e.g., triggered by) a user command (e.g., a prompt), wherein the user command at least one of
- comprises (e.g., and/or corresponds to) at least one of
   - a textual command (e.g., input as text),
   - an auditory command (e.g., spoken commands and/or sounds and/or recorded previous verbal input), or
   - a visual command (e.g., a camera image and/or video), or
- comprises an indication of a future activity of the user, in particular at least one of
   - a type of the activity (e.g., dinner and/or sport),
   - at least one location of the activity,
   - at least one person involved in the activity, or
   - a time of the activity.

A next destination may be based on a current interaction of the user with the first apparatus. Additionally or alternatively, a next destination may be based on user command. The user command may be part of a current interaction and/or be separate (e.g., treated separately) from (e.g., independently of) a current interaction.

A user command may be obtained in the form of text, audio and/or as visual input (e.g., as a video and/or picture). The user context may comprise at least one indication of at least one aspect of a future of the user, e.g., of a future activity. The user command may for instance indicate that the user desires to go to a restaurant, to a sports club, to a friend and/or family and/or combinations thereof.

The user command may comprise a request for a next destination. For instance, the user command may refer to a previous interaction. For instance, a user command may indicate at least one property of a previous interaction, e.g., "Guide me to the restaurant that Mike mentioned about a week ago on social network X." or "Let's go to the place Mike mentioned while we were discussing on the train".

According to an embodiment of the first example aspect, the determining the next destination comprises:
- retrieving at least one previous interaction based on at least one of the current interaction or the user command, in particular wherein the current interaction or the user command relate to at least one location-unspecific (e.g., uninformative (e.g., not (e.g., explicitly) informative) of the location, e.g., without considering the interaction; e.g., may still be correlated with location, in particular within a user context) aspect of the previous interaction (e.g., to a person, a device, a mode of transport and/or further aspects as listed above), and
- determining at least one location associated with the at least one retrieved previous user context as the next destination, in particular further based on at least one of the current interaction or the user command.

It has been recognized that previous interactions may be referred to by the user as a means of determining a location associated with the previous interaction because they cannot directly refer to the location (e.g., because they are not in possession of identifying information, e.g., other than a memory of the interaction).

Thus, when determining a next destination based on a current interaction and/or a user command, a previous interaction may be retrieved based on location-unspecific aspects of the previous location. E.g., the current interaction and/or the user command may indicate a previous interaction (e.g., by at least one property) yet may be unindicative (e.g., by themselves, e.g., without considering the previous interaction) of a location (e.g., a desired location such as a candidate next destination) associated with the previous interaction. For instance, a previous interaction may involve a discussion between two or more people (e.g., including person Y) at a location (e.g., in the office) wherein another location (e.g., location of interest) (e.g., a restaurant) has been discussed (e.g., briefly). A user may not remember the restaurant name but remembers the previous interaction (e.g., based on a time, a location and/or at least one person involved - e.g., which may all be unspecific to the restaurant discussed). The user may then, e.g., as a user command, provide input of the form "Let's go to the restaurant that was mentioned at the office when talking to person Y.". The appropriate previous interaction may subsequently be retrieved and the restaurant may be determined as the next destination.

At least one of or both of the retrieving of a previous interaction (e.g., one or more previous interactions) and the determining of a next destination based on the previous interaction may be based on the current interaction and/or the user command.

According to an embodiment of the first example aspect, the determining the next destination comprises:
- determining at least two candidate reference points, wherein the reference points comprise at least one of:
   - previous locations of at least one or more previous interactions, or
   - at least two or more candidate previous interactions,
- providing a request to the recipient (e.g., user) for an indication of one (e.g. or more) of the at least two reference points (e.g., wherein the indication may be a further factor for selecting a next destination) such as indicating a mode of transport desired), in particular wherein the request is indicative of at least one of the two or more candidate reference points.

It has been recognized that determining a next destination may not necessarily yield a single result (e.g., single next destination). Instead, at least two or more candidate reference points (previous interactions and/or previous locations based on previous interactions) may be determined, e.g., as a respective basis for and/or as a next destination.

For instance, one reference point and one according next destination may be determined automatically (e.g., as a best guess; e.g., based on criteria such as a probability of pertinence, e.g., based on previous interactions with a user).

Additionally or alternatively, the user may be queried for a selection of one of multiple options of reference points. For instance, a request may be provided to the user indicating at least a subset of the determined at least two (e.g., at most 3, 4, 5, 6, 7, 8, 9 or 10) candidate reference points.

A response from a user may subsequently be obtained, based on the request. The response may indicate at least one or a subset of candidate reference points (e.g., less candidate reference points than provided with the request to the user). The response may for instance (e.g., explicitly) indicate a reference point (e.g., a previous context and/or previous location; e.g., as a next destination). Additionally or alternatively, the response may for instance indicate a (e.g., further) aspect to be considered when selecting a reference point (e.g., a mode of transport desired and/or a property of the previous interaction that is the most relevant). Based on the response, a reference point may be selected, e.g., and further, a next destination may be determined based on the selected reference point.

According to an embodiment of the first example aspect, the determining the next destination is further based on (e.g., a property associated with) the previous interaction of the user with the second apparatus (e.g., at least one or more of the above-listed properties of the previous interaction), in particular on a (e.g., or more than one) (e.g., required and/or possible) transport mode associated with the previous interaction (e.g., wherein transport modes associated with a plurality of candidate previous locations are considered).

A previous interaction may not only be retrieved but the determining of the next destination may be based on the previous interaction. To this end, any of the above-disclosed (e.g., and/or further) properties of the previous interaction may be taken into account and/or combined.

One property which has been recognized to be particularly relevant to destination selection is a mode of transport. The mode of transport may for instance be associated with a location (e.g., a candidate destination). For instance, a location may (e.g., only) be reachable by car, another location may be reachable by foot and/or public transport (e.g., and does not provide parking spaces for cars). The mode of transport may additionally or alternatively be associated to the previous interaction. For instance, the user may have utilized a certain mode of transport during at least a part of the interaction.

The transport mode associated with the previous interaction may be enriched with information relevant to a current user situation (e.g., at a time of navigating to the next destination), e.g., to a time and/or a location. For instance, it may be inferred (e.g., in advance) (e.g. based on a time of departure) which transport mode (e.g., a public transport vehicle) is available and/or allows for a timely arrival at the new destination. For instance, such inference may be performed based on information about transport modes, e.g., based on at least one timetable and/or schedule. To this end, internet sources may be utilized from which up-to-date information about transport modes may be retrieved, e.g., based on a candidate destination and/or the determined new destination.

According to an embodiment of the first example aspect, the determining is further based on the (e.g., property associated with the) current interaction (e.g., usage of the first apparatus for a given past time span; e.g., at most or at least 1s, 5s, 10s, 20s, 30s, 1min, 2min, 5min, 10min, 15min, 20min, 30min, 45min, 1h or 2h) of the user with the first apparatus (e.g., at least one or more of the above-listed properties of the current interaction), in particular on one or more currently available (e.g., as determined by the apparatus, e.g., based on the current interaction) transport modes associated with the current interaction (e.g., by comparison with required and/or possible transport modes of candidate previous locations).

One of more properties of a current interaction may be used to determine a next destination. A particularly useful property has been recognized to be a transport mode associated with the current interaction. For instance, this may be an available transport mode (e.g., availability of a car, of a bike, of public transport, of a sharing service such as a bike, scooter or car sharing and/or combinations thereof). An available transport mode may be determined based on the current interaction, e.g., based on a time and/or location of the current interaction (e.g., in combination with information about public transport and/or about available routes (e.g., bike routes)) and/or based on a type of device used (e.g., a car system indicating availability of a car).

For instance, if a previous transport mode (e.g., associated with the previous interaction and/or previous location associated with the previous location) matches a currently available transport mode, this may favor a determination of a corresponding previous location as next destination.

According to an embodiment of the first example aspect, the first apparatus and/or the second apparatus correspond to one of a (e.g., smart) phone, a wearable (e.g., a smartwatch), a car (e.g., infotainment) system, a tablet and/or an IoT device (e.g., home assistant).

According to an embodiment of the first example aspect, the determining is performed by using a trained large language model, LLM, in particular an LLM based on a transformer architecture and trained on (e.g., multimodal) interaction data.

It has been recognized that LLMs are particularly powerful in integrating loosely formatted and/or heterogeneous input (e.g., multimodal input and/or text input). LLMs have proven function in inferring implicit information in queries and in integrating a context (e.g., the user context) with a query (e.g., a prompt) to provide a reasoned output (e.g., a new destination).

An LLM may for instance be combined with online sources, e.g., regarding information on locations (e.g., opening hours) and/or regarding information on transport modes.

According to a second example aspect, a method is proposed, for instance performed and or controlled by a terminal device, comprising:
- acquiring (e.g., recording) at least one previous interaction of a user with the second apparatus,
- creating a user context by joining (e.g., appending) the previous interaction to an existing user context (e.g., may be empty), wherein the interaction is (e.g., the interactions are respectively) indicative of the second apparatus and of a respective previous location (e.g., and/or destination) (e.g., related to and/or relevant to the user; e.g., of the user) (e.g., wherein the user context additionally comprises interactions which are not indicative of a location and/or destination), and
- providing or making available the user context to a first apparatus (e.g., different from the second apparatus)(e.g., by intermediary of a third apparatus, e.g., a server).

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a network node or a terminal device, e.g., a UE, to perform and/or control the actions of the method according to the second example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the second example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

Features disclosed with respect to the first aspect are disclosed for the second aspect as well, where applicable, and vice versa.

The method comprises acquiring at least one previous interaction of a user with an apparatus performing and/or controlling the method according to the second example aspect (e.g., second apparatus). The previous interaction may for instance be associated with at least one property as detailed with respect to the current interaction and/or the previous interaction of the first example aspect.

The method further comprises creating a user context by joining (e.g., appending) the previous interaction to an existing user context (e.g., may be empty). For instance, the user context may take a shape of a table comprising rows for interactions and multiple columns for different properties of an interaction. Additionally or alternatively, the user context may comprise interactions in form of text (e.g., non-structured text). Text form may be advantageous in order to provide the interactions to a language-processing machine learning model such as an LLM.

An interaction may be joined to a user context by adding respective data at an end (e.g., new last row in a table and/or additional sentences in a text) of the user context. For instance, there may not exist a user context. In this case, joining may be replaced by an instantiation of a new user context with one interaction.

A user context may be of arbitrary length and/or size. Additionally or alternatively, a user context may be pruned to a maximum length, e.g., by removing old and/or unused interactions. For instance, additionally or alternatively, previous interactions already referenced for a new destination (e.g. by another apparatus, e.g., the first apparatus) may subsequently be removed (e.g., by the first apparatus), e.g., because their location-relevant content is now reflected in a new interaction corresponding to the new destination. For instance if the user navigates to the new destination, this may create a new interaction and, e.g., replace the previous one indicating the corresponding location.

The interaction is (e.g., the interactions are respectively) indicative of the second apparatus. Additionally, the interaction is (e.g., the interactions are respectively) indicative of a respective previous location (e.g., and/or destination). The user context may additionally comprise at least one or more interactions which are not indicative (e.g., and/or unspecific) of a location and/or a destination. For instance, such an interaction may still contain information associable to a location, yet may not contain explicit mentions and/or information of locations.

According to an embodiment of the second example aspect, the previous interaction is associated to at least one of (e.g., and stored as metadata, e.g., tabular metadata) (e.g. comprised in the user context):
- a time (e.g., time of the day, time stamp) (e.g., season) (e.g., year) of the previous interaction,
- the second apparatus with which the interaction took place,
- a usage context (e.g., search for a place to eat, discussion on locations with a friend, or planning a trip),
- a voice input provided by the user (e.g., during the previous interaction) (e.g., may additionally or alternatively differentiate between one or more modes (e.g., activity, mood, work vs leisure, and/or combinations thereof) of the user based on tone and/or level, further characteristics of the voice and/or combinations thereof),
- an image presented to (e.g., digitally, e.g., through an internet search and/or within an application; e.g., in a social network website and/or application) the user and/or captured by the user using a camera of the second apparatus,
- a text presented to and/or entered by the user,
- a location of the user (e.g., during at least a part of the previous interaction),
- a location of a previous destination,
- a presence of one or more further persons (e.g., during at least part of the interaction) (e.g., including characteristics such as age, relationship (e.g., family members or friends), frequency of activities together with the user)
- a sound environment (e.g., noise or quiet), or
- a transport mode (e.g., available and/or used during at least part of the interaction) (e.g., public transport, foot, bike, electric scooter, car, motorbike, plane, boat, and/or misc. (e.g., skateboard, inline skates, push scooter, and/or surfboard)).

According to an embodiment of the second example aspect, the first apparatus and/or the second apparatus correspond to one of a (e.g., smart) phone, a wearable (e.g., a smartwatch), a car (e.g., infotainment) system, a tablet and/or an IoT device (e.g., home assistant).

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic visualization of a system, apparatus and method according to all example aspects of the present invention;
- Fig. 2a,b: a schematic visualization of methods according to all example aspects of the present invention;
- Fig. 3: a schematic visualization of a user context according to all example aspects of the present invention;
- Fig. 4: a schematic visualization of a scenario in which methods according to all example aspects of the present invention may be employed;
- Fig. 5: a flowchart showing an example embodiment of a method according to the first example aspect of the present invention;
- Fig. 6: a flowchart showing an example embodiment of a method according to the second example aspect of the present invention;
- Fig. 7: a schematic block diagram of an apparatus configured to perform the method according to the first example aspect of the present invention;
- Fig. 8: a schematic block diagram of an apparatus configured to perform the method according to the first example aspect of the present invention; and
- Fig. 9: a schematic illustration of examples of tangible and non-tangible storage media according to the present invention.

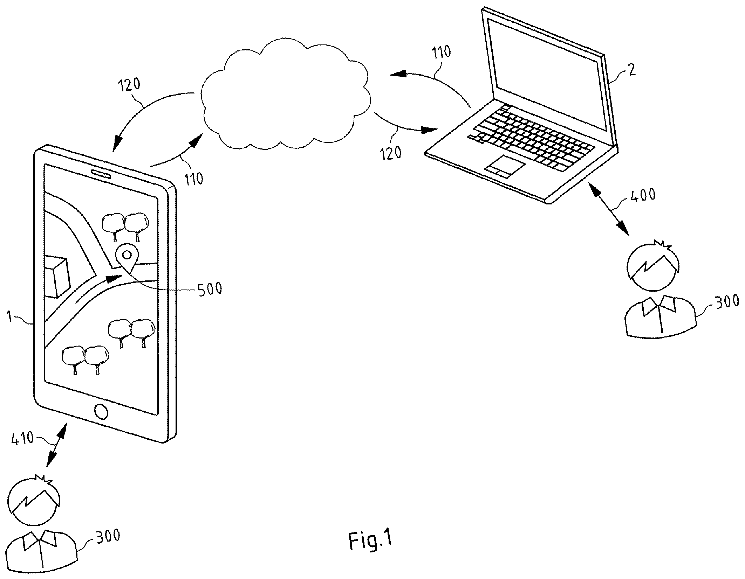

Fig. 1 demonstrates a first apparatus 1, e.g., according to the first example aspect. The first apparatus 1 may interact with a user 300, e.g., by a current interaction 410. The first apparatus 1 may obtain, from a second apparats (e.g., according to the second example aspect) a previous interaction 400. For instance, the previous interaction may have occurred between the second apparatus 2 and the user 300. The second apparatus 2 in the shown example corresponds to a laptop 2, whereas the first apparatus 1 corresponds to a smartphone 1. The previous interaction 400 may be obtained by intermediary of a server visualized as a cloud and through communication links 110 and 120. For instance, the second apparatus 2 may have provided the previous interaction 400 (e.g., and further interactions) to the cloud server through a communication link 110. Subsequently, the first apparatus 1 may obtain the interaction 400 through communication link 120 from the cloud server. Communication links may for instance be wireless and/or wired, in particular at least partially according to a cellular communication standard as defined by the 3GPP standardization partnership.

The other way around, the first apparatus 1 may also provide the current interaction 410 to the second apparatus 2, e.g., by intermediary of the cloud server. When the user 300 may (e.g., at a later stage) again utilize the second apparatus 2, the current interaction 410 with the first apparatus 1 may take the role of a previous interaction 400 from a standpoint of interacting with the second apparatus 2. A user context integrating multiple interactions 400, 410 may be stored in the cloud.

The user 300 may provide a user command to the first apparatus 1, e.g., indicative of a previous interaction 400, in order to obtain a next destination.

The first apparatus 1 may provide a next destination 500, e.g., based on the current interaction 410 and/or the user command. As shown, a next destination may for instance be provided by visual means, e.g., by a map indicating the next destination 500.

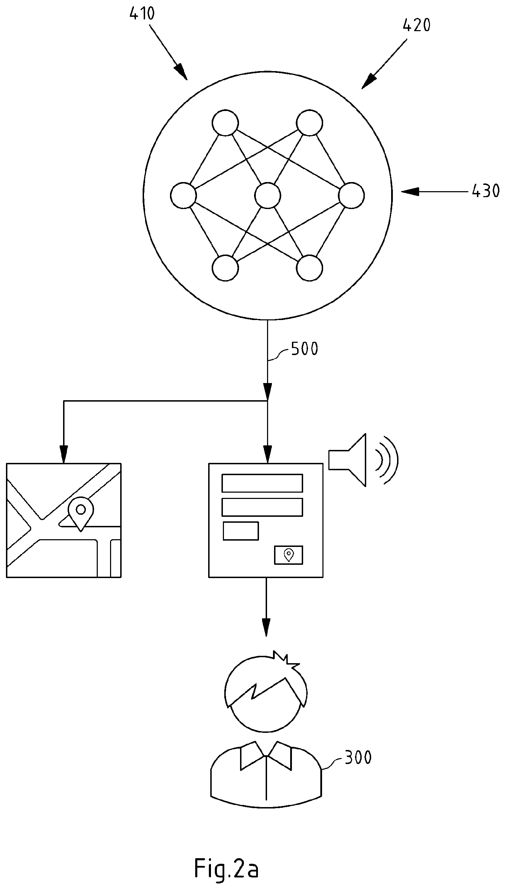

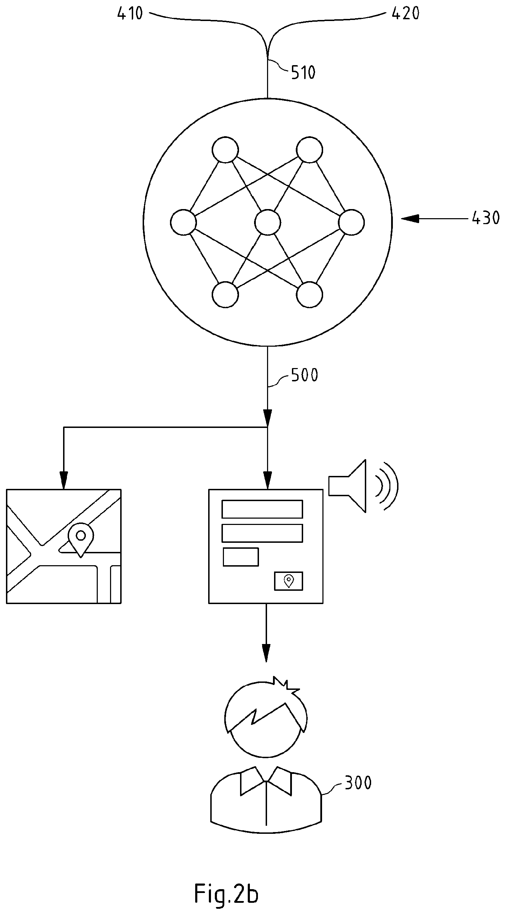

Fig. 2a,b demonstrate the inner workings of a method, in particular corresponding to the first example aspect, e.g., performed by the first apparatus 1 shown in Fig. 1. A first interaction (e.g., the current interaction) 410 and a second (e.g., previous) interaction 420 are fed to a machine learning model (shown as a neural network), in particular large language model (LLM). Additionally (e.g., or alternative to the first interaction), a user command 430 may be provided to the machine learning model. As an output, a next destination 500 may be obtained from the machine learning model. The output 500 may be provided to the user 300, e.g., by means of visual output (e.g., a map and/or text) and/or auditorily.

While in Fig. 2a, the two interactions 410, 420, are both provided separately to the machine learning mode. For instance, the second, previous interaction 420, may be provided as part of a user context, e.g., comprising multiple interactions 420. The first interaction 410 may for instance be provided as a prompt to the machine learning model, e.g., in addition to a user command 430. Alternatively, as shown in fig. 2b, the two interactions 410, 420 may be provided jointly to the machine learning model, e.g., as part of a common context (e.g., wherein the first, current interaction 410 may have been joint (e.g., appended) to a user context comprising (e.g., inter alia) the second, previous interaction 420). The user command 430 may be provided as a prompt. Additionally or alternatively, a system prompt, such as for instance "Provide a next most probable destination based on the provided user context." or "Provide a next most probable destination based on the provided user context and taking into account transport options.". Same or similar (system) prompts may be used in Fig. 2a.

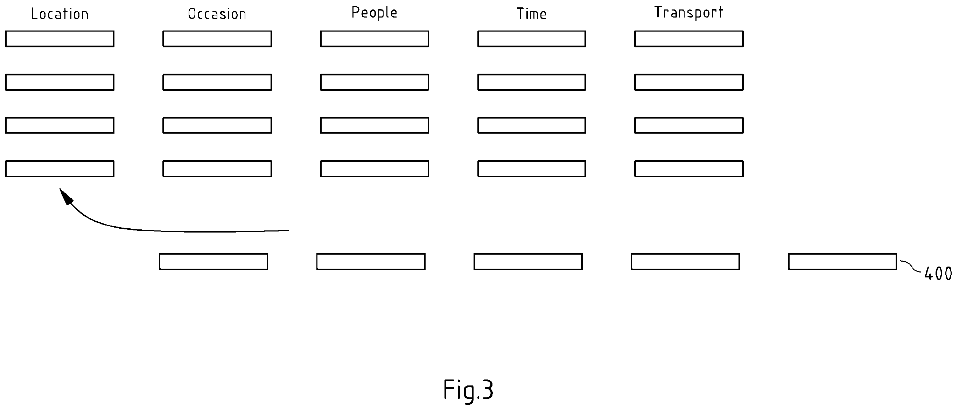

Fig. 3 illustrates an example of a user context comprising four previous interactions such as used in the first and/or second example aspect. A respective interaction may be characterized by (e.g., at least one of) properties location, occasion, people (e.g., involved in the interaction), time and/or transport (e.g., mode used). A new interaction 400 (e.g., previous interaction may be joint to the user context (e.g., appended) as a new row.

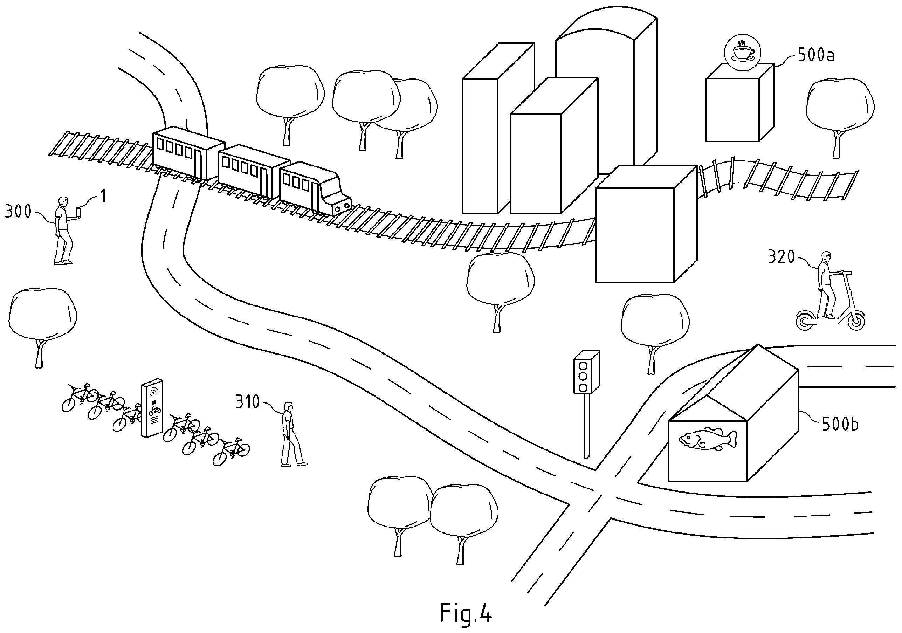

Fig. 4 shows an example situation wherein a user 300 may navigate with the aid of the methods and/or apparatus according to the first and/or second example aspect.

The user 300 may be equipped with a terminal device 1 according to the first example aspect. The current position may enable the user 300 to use one of public transport (e.g., tram as shown), self-propelled transport (e.g., sharing station for bicycles as shown near person 310) or electric scooter (see example person 320). The scenery further comprises a first candidate destination 500a, a café, and a second candidate destination 500b, a fish restaurant. For instance, the two candidate destinations 500a, 500b may reflect and/or be associated to previous interactions of the user 300 with a second apparatus (not shown). For instance, the user 300 may have been recommended the fish restaurant 500b by a friend in a chat history a few weeks ago. For instance, the café 500a may be shown in the background of a selfie picture of a friend whom the user 300 trusts in terms of choice of restaurants in general.

The user 300 may provide a user command to the first apparatus 1 indicating that they are tired and need some savory snack. The apparatus 1 may determine a current position of the user 300 as a property of the current interaction. The apparatus may further consider (e.g., multiple) previous interactions and find that the recommended fish restaurant 500b has not yet been visited and this may be a suitable occasion to get savory food as required. Yet, fish restaurant 500b is only reachable by car or by bike (e.g., or scooter, as demonstrated by person 320). The user 300, however, does not have a car at their disposal (e.g., available mode of transport according to current user context, e.g., based on movement profile of the user 300 of the past hour). There is a sharing station for bikes nearby but the user 300 is tired and will not want to use a bike. Apparatus 1 may determine that this is not the time for fish restaurant 500b based on the available and required transport modes and further based on the current state of the user 300. Apparatus 1 may instead consider the next best option and may find, e.g., based on the previous interaction of the user 300 wherein a selfie showed the café 500a, the café 500a as a nearby alternative. The apparatus 1 may further review an online source (e.g., website or map data relating to) the café 500a and may verify there is savory food to be eaten at this time of the day. After confirming that there is indeed savory food, the apparatus 1 may review current schedules of the public transport (tram) and provide to the user new destination 500a as a destination and a next (e.g., and subsequent) starting time of a tram in this direction.

Countless other recommendations may be possible, for instance, a sportive user 300 may be known to prefer the shared bikes and may receive suggestion to cycle to the fish restaurant 500b, largely ignoring other transport options.

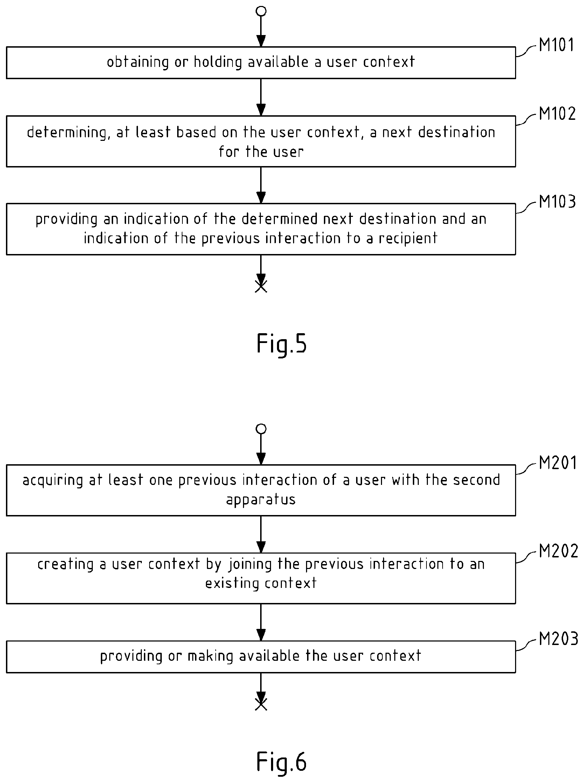

Fig. 5 is a flow diagram illustrating the method according to the first example aspect, for instance performed and/or controlled by an apparatus according to the first aspect.

A step M101 comprises obtaining or holding available (e.g., obtaining from a second apparatus, e.g. via a third apparatus such as a server) a user context, wherein the user context (e.g., comprises data which) is indicative of a (e.g., one or more) previous interaction of a user with a second apparatus (e.g., different from (e.g., type compared to) the first apparatus) (e.g., and additionally interactions with at least one or more further apparatus), wherein the previous interaction is (e.g., the interactions are respectively) indicative of the second apparatus and of at least one respective previous location(e.g., and/or destination) (e.g., related to and/or relevant to the user; e.g., of the user) (e.g., wherein the user context additionally comprises interactions which are not indicative of a destination).

A step M102 comprises determining, at least based on the user context, a next destination (e.g. destination candidate) for the user corresponding to (e.g., identical to) a location of the at least one previous location and associated with the second apparatus.

A step M103 comprises providing (e.g., output; e.g., visually and/or auditory; e.g., to the user)(e.g., to a routing functionality of the apparatus) an indication of the determined next destination and an indication (e.g., one joint indication) of the previous interaction (e.g., thereby indicating the second device) to a recipient.

Fig. 6 is a flow diagram illustrating the method according to the second example aspect, for instance performed and/or controlled by an apparatus according to the second aspect.

A step M201 comprises acquiring (e.g., recording) at least one previous interaction of a user with the second apparatus.

A step M202 comprises creating a user context by joining (e.g., appending) the previous interaction to an existing user context (e.g., may be empty), wherein the interaction is (e.g., the interactions are respectively) indicative of the second apparatus and of a respective previous location (e.g., and/or destination) (e.g., related to and/or relevant to the user; e.g., of the user) (e.g., wherein the user context additionally comprises interactions which are not indicative of a location and/or destination).

A step M203 comprises providing or making available the user context to a first apparatus (e.g., different from the second apparatus)(e.g., by intermediary of a third apparatus, e.g., a server).

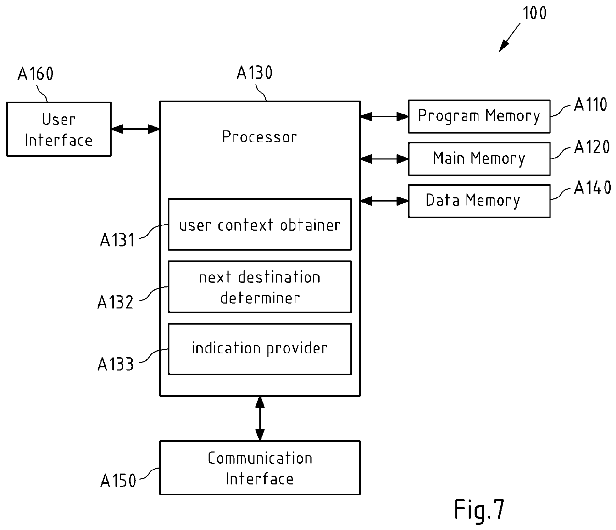

Fig. 7 shows an example block diagram of an apparatus 100 (e.g., performing and/or controlling a method according to the first example aspect, e.g., a mobile device). The apparatus 100 may perform a method according to the first example aspect. The apparatus may comprise a user interface A160, a program memory A110, a main memory A120, and a data memory A140. Further, it comprises a processor A130. The apparatus 100 may further comprise the functional units user context obtainer A131 (e.g., corresponding to method step M101 of Fig. 5), a next destination determiner A132 (e.g., corresponding to method step M102 of Fig. 5), an indication provider A133 (e.g., corresponding to method step M103 of Fig. 5). A functional unit may for instance correspond to a code block within a memory A110, A120, A140. The functional units A131, A132, A133 may for instance be connected to and/or control the communication interface A150.

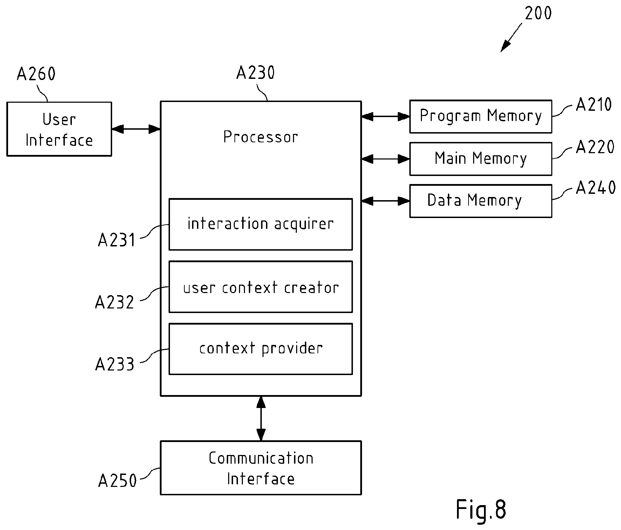

Fig. 8 shows an example block diagram of an apparatus 200 (e.g., performing and/or controlling a method according to the second example aspect, e.g., a mobile device). The apparatus 200 may perform a method according to the second example aspect. The apparatus may comprise a user interface A260, a program memory A210, a main memory A220, and a data memory A240. Further, it comprises a processor A230. The apparatus 200 may further comprise the functional units user interaction acquirer A231 (e.g., corresponding to method step M201 of Fig. 6), user context creator A232 (e.g., corresponding to method step M202 of Fig. 6), user context provider A233 (e.g., corresponding to method step M203 of Fig. 6). A functional unit may for instance correspond to a code block within a memory A210, A220, A240. The functional units A231, A232, A233 may for instance be connected to and/or control the communication interface A250.

Processor A110, A210 (and also any other processor mentioned in this specification) may be a processor of any suitable type. Processor A210, A110 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor A210, A110 may for instance be an application processor that runs an operating system.

Program memory A130, A230 may also be included into processor A110, A210. This memory may for instance be fixedly connected to processor A110, A210, or be at least partially removable from processor A110, A210, for instance in the form of a memory card or stick. Program memory A130, A230 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory A130, A230 may also comprise an operating system for processor A110, A210. Program memory A130, A230 may also comprise a firmware for the respective apparatus.

Working memory A120, A220, may for instance take the form of a volatile memory. It may for instance be a Random Access Memory (RAM) or Dynamic RAM (DRAM), to give but a few non-limiting examples. It may for instance be used by processor A110 when executing an operating system and/or computer program.

Data memory A140, A240 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory A140, A240 may for instance store interactions and/or a user context, to name non-limiting example.

Communication interface(s) A150, A250 enable communication with other entities. The communication interface(s) A150, A250 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable the respective apparatus to communicate with other entities.

User interface A160, A260 is optional and may comprise a display for displaying information to a user and/or an input device (e.g. a keyboard, keypad, touchpad, mouse, etc.) for receiving information from a user.

Some or all of the components of the respective apparatus may for instance be connected via a bus. Some or all of the components of the apparatus 1 may for instance be combined into one or more modules.

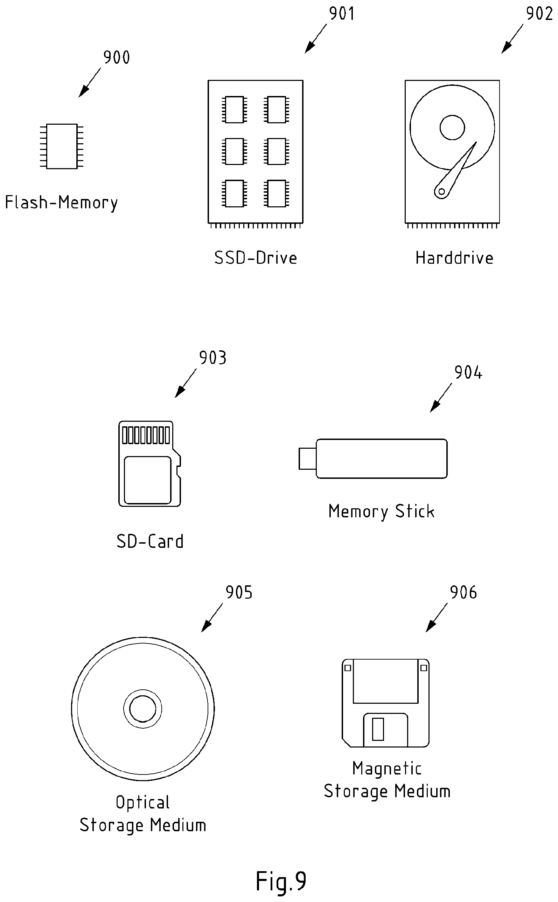

Fig. 9 is a schematic illustration of examples of tangible and non-transitory computer-readable storage media according to the present invention that may for instance be used to implement one or more of the memories A110, A120, A140, A210, A220, A240 of Fig. 7 and 8. To this end, Fig. 9 displays a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A first apparatus, comprising:
- means for obtaining or holding available a user context, wherein the user context is indicative of a previous interaction of a user with a second apparatus, wherein the previous interaction is indicative of the second apparatus and of at least one respective previous location,
- means for determining, at least based on the user context, a next destination for the user corresponding to a location of the at least one previous location and associated with the second apparatus,
- means for providing an indication of the determined next destination and an indication of the previous interaction to a recipient.

2. The first apparatus according to claim 1, wherein the recipient is at least one of
- the user, and
- a part of a computer system, in particular wherein the providing launches a navigation to the next destination.

3. The first apparatus according to claim 1 or 2, wherein
- the second apparatus is different from the first apparatus, and
- the providing further comprises providing an indication of the second apparatus to the recipient.

4. The first apparatus according to any of claims 1 to 3, wherein the previous interaction is associated to at least one of:
- a time of the previous interaction,
- the second apparatus with which the interaction took place,
- a usage context,
- a voice input provided by the user,
- an image presented to the user and/or captured by the user using a camera of the second apparatus,
- a text presented to and/or entered by the user,
- a location of the user,
- a location of a previous destination,
- a presence of one or more further persons
- a sound environment, or
- a transport mode.

5. The first apparatus according to any of claims 1 to 4, further comprising
- means for obtaining a current interaction.

6. The first apparatus according to claim 5, wherein the current interaction is associated with at least one of
- a time of the current interaction,
- the first apparatus,
- a usage context,
- a verbal input provided by the user,
- an image presented to the user and/or captured by the user using a camera of the first apparatus,
- a text presented to and/or entered by the user,
- a location of the user,
- a presence of one or more further persons,
- a sound environment, or
- a transport mode.

7. The first apparatus according to any of claims 1 to 6, wherein the determining the next destination is further based on a user command, wherein the user command at least one of
- comprises at least one of
- a textual command,
- an auditory command, or
- a visual command, or
- comprises an indication of a future activity of the user, in particular at least one of
- a type of the activity,
- at least one location of the activity,
- at least one person involved in the activity, or
- a time of the activity.

8. The first apparatus according to any of claims 1 to 7, wherein the determining the next destination comprises:
- retrieving at least one previous interaction based on at least one of the current interaction or the user command, in particular wherein the current interaction or the user command relate to at least one location-unspecific aspect of the previous interaction, and
- determining at least one location associated with the at least one retrieved previous interaction as the next destination, in particular further based on at least one of the current interaction or the user command.

9. The first apparatus according to any of claims 1 to 8, wherein the determining the next destination comprises:
- determining at least two candidate reference points, wherein the reference points comprise at least one of:
- previous locations of at least one or more previous interactions, or
- at least two or more candidate previous interactions,
- providing a request to the recipient for an indication of one of the at least two reference points, in particular wherein the request is indicative of at least one of the two or more candidate reference points.

10. The first apparatus according to any of claims 1 to 9, wherein the determining the next destination is further based on the previous interaction of the user with the second apparatus, in particular on a transport mode associated with the previous interaction.

11. The first apparatus according to any of claims 5 to 10, wherein the determining is further based on the current interaction of the user with the first apparatus, in particular on one or more currently available transport modes associated with the current interaction.

12. The first apparatus according to any of claims 1 to 11, wherein the determining is performed by using a trained large language model, LLM, in particular an LLM based on a transformer architecture and trained on interaction data.

13. A second apparatus comprising:
- means for acquiring at least one previous interaction of a user with the second apparatus,
- means for creating a user context by joining the previous interaction to an existing user context, wherein the interaction is indicative of the second apparatus and of a respective previous location, and
- means for providing or making available the user context to a first apparatus.

14. The second apparatus according to claim 13, wherein the previous interaction is associated to at least one of:
- a time of the previous interaction,
- the second apparatus with which the interaction took place,
- a usage context,
- a voice input provided by the user,
- an image presented to the user and/or captured by the user using a camera of the second apparatus,
- a text presented to and/or entered by the user,
- a location of the user,
- a location of a previous destination,
- a presence of one or more further persons
- a sound environment, or
- a transport mode.

15. A system comprising a first apparatus according to any of claims 1 to 12 and a second apparatus according to any of claims 13 and 14.

16. A method comprising:
- obtaining or holding available a user context, wherein the user context is indicative of a previous interaction of a user with a second apparatus, wherein the previous interaction is indicative of the second apparatus and of at least one respective previous location,
- determining, at least based on the user context, a next destination for the user corresponding to a location of the at least one previous location and associated with the second apparatus,
- providing an indication of the determined next destination and an indication of the previous interaction to a recipient.

17. A computer program, the computer program when executed by a processor causing an apparatus to perform and/or control the actions and/or steps of the method of claim 16.
